# EUROPEAN PATENT APPLICATION

(11) **EP 2 105 766 A2**
(43) Date of publication of application: **30.09.2009**
(21) Application number: 09154980.8
(22) Date of filing: 12.03.2009
(51) Int. Cl.: G02B 1/04, D06P 1/90, G02C 7/02

(54) **Dyeing method for plastic lens**

(30) Priority: 26.03.2008 JP 2008080697
(71) Applicant: Seiko Epson Corporation, Tokyo 163-0811 (JP)
(72) Inventor: Saito, Toru, Nagano 392-8502 (JP); Uchida, Naoki, Nagano 392-8502 (JP); Imai, Yuko, Nagano 392-8502 (JP)
(74) Representative: HOFFMANN EITLE

(57) **Abstract**

A dyeing method for a plastic lens includes immersing the plastic lens in an oil bath containing a dye.

## Description

The entire disclosure of Japanese Patent Application No. 2008-080697, filed March 26, 2008 is expressly incorporated by reference herein.

### BACKGROUND

### 1. TECHNICAL FIELD

The present invention is related to a dyeing method for a plastic lens.

### 2. RELATED ART

There have been various known dyeing methods for a plastic lens such as a spectacle lens. The known dyeing methods include a method in which a lens base material is directly dyed and a method in which a to-be-dyed layer formed on a lens base material is dyed.

Specifically, a water-based dyeing pot in which a disperse dye and, as needed, a surfactant and a dye carrier are added is put in hot water of approximately 90 degrees C. Subsequently, a lens base material is immersed in the dyeing pot while the mixture is agitated so as to directly dye the lens base material (for example, Document 1: JP-A-10-259580, Document 2: JP-A-6-313801, Document 3: JP-A-6-347602).

Alternatively, a lens base material may be provided with a hard coat layer capable of being dyed in hot water, and then immersed in the above-described dyeing pot to be dyed.

In recent years, a plastic lens has been thinned, and a material with a high refractive index has been developed and commercialized. For example, a thiourethane resin is typically used as a material having a refractive index n of 1.69 or less, and an episulfide resin is typically used as a material having a refractive index n of 1.70 or more.

The thiourethane resin has appropriate water-absorptivity. Thus, a plastic lens made of the thiourethane resin can be easily dyed by being dipped in a water-based dyeing pot. On the other hand, the episulfide resin has extremely low water-absorptivity. Thus, a plastic lens made of the episulfide resin can be hardly dyed by being dipped in a water-based dyeing pot. Even after the plastic lens is immersed for a long time, the plastic lens cannot be strongly dyed.

To enhance a dyeing speed, a temperature of a dyeing pot is typically raised. However, it is difficult that a temperature of a water-based dyeing pot is raised over 100 degrees C. To raise the temperature of the dyeing pot to 100 degrees C or more, the dyeing pot can be entirely covered with a pressure container or the like and hermetically-closed. However, an apparatus of large size may be required, and dyeing tone may not be checked during a dyeing process.

Also, since it is required that the water-based dyeing pot is heated to approximately 90 degrees C, water, a dye carrier and the like may be vaporized and dyeing property may be changed.

Further, when a plastic lens on which a hard coat layer is formed is dyed, a chemical compound having high water absorption needs to be added since a material used for forming the hard coat layer is typically difficult to be dyed. Consequently, hardness of the hard coat layer may be lowered and abrasion resistance may be deteriorated.

### SUMMARY

Exemplary aspects of the invention provide a dyeing method capable of dyeing a plastic lens for a short time.

A dyeing method for a plastic lens according to an aspect of the invention includes immersing the plastic lens in an oil bath containing a dye.

An oil-based dyeing pot is used according to the exemplary aspect of the invention, so that dye-affinity of the plastic lens made of a material having low water absorption can be enhanced. Thus, dyeing time can be shortened.

Also, because a temperature of the oil-based dyeing pot can be raised to a high temperature, for instance, 100 degrees C or more, the dye-affinity can be further enhanced. Thus, the dyeing time for the plastic lens can be considerably shortened, which leads to excellent manufacturing efficiency.

Further, because a surface of the plastic lens can be uniformly dyed even when being dyed at a high temperature, quality of the plastic lens can be maintained.

Furthermore, because oil is not easily volatilized, the change of dyeing property of the dyeing pot can be prevented even after elapse of time.

According to the exemplary aspect of the invention, the plastic lens may be made of an episulfide material.

Since the episulfide material has low water absorption and high lipophilicity, the episulfide resin lens base material is not easily dyed in a water-based dyeing pot even after being dyed for a long time.

However, because the oil-based dyeing pot is used according to the exemplary aspect of the invention, the episulfide resin lens base material can be easily dyed and dyeing time can be considerably shortened. Thus, excellent manufacturing efficiency can be exhibited because the dyeing time for the episulfide resin lens base material can be considerably reduced.

According to the exemplary aspect of the invention, the plastic lens may have a single layered or multilayered hard coat layer.

The hard coat layer typically has low water absorption and high lipophilicity.

Since the oil-based dyeing pot is used according to the exemplary aspect of the invention, the hard coat layer can be easily dyed. Consequently, dyeing time for the lens base material on which the hard coat layer is formed can be considerably reduced.

Additionally, a compound having high water absorption, which is conventionally added to make the hard coat layer dyeable, does not need to be added at this time. Consequently, an original hardness of the hard coat layer can be maintained, and therefore a dyed lens having high abrasion-resistance can be obtained.

In the dyeing method for a plastic lens according to the exemplary aspect of the invention, the hard coat layer may contain the following (A) and (B);
(A) a fine inorganic oxide particle, and
(B) an organosilicon compound represented by the following formula (1),

R¹R²ₙSiX¹₃₋ₙ (1)

In the formula, R¹ is the organic group having the polymerizable reactive group, R² is a hydrocarbon group having 1 to 6 carbon atoms, X¹ is a hydrolyzable group, and n is 0 or 1.

The component (A) may be a fine inorganic oxide particle having an average size of 1 to 200nm and containing a composite oxide having a rutile-type crystal structure formed of titanium oxide and tin oxide, or titanium oxide, tin oxide and silicon oxide. For the purpose of preventing interference fringes, the hard coat layer is required to have a high refractive index. In order to provide the hard coat layer with a high refractive index, a method using fine inorganic oxide particle with a high refractive index is typically employed. Specifically, an oxide of one or more of metals selected from Al, Sn, Sb, Ta, CE, La, FE, Zn, W, Zr, In and Ti (including mixture thereof) and/or transparent fine inorganic oxide particle formed of a composite oxide containing two or more metals. Among these, a fine inorganic oxide particle containing titanium oxide is typically used in terms of refractive index, transparency, dispersion stability and the like.

An organosilicon compound as the component (B) is a so-called silane coupling agent, which serves as a binder resin of the hard coat layer. The compound represented by the formula (1) is preferably used because the compound serves as a strong binder resin of the fine inorganic oxide particle in the hard coat layer.

In the dyeing method for a plastic lens according to the exemplary aspect of the invention, the dye may be a solvent dye.

According to the exemplary aspect of the invention, dyeing agent is prepared by adding the solvent dye in the oil-based dyeing pot.

Since the solvent dye is easily dissolved in the oil, the solvent dye can be uniformly dissolved in the oil and sufficiently serve as the dye.

The lens base material or the hard coat layer, which is conventionally not easily dyed in a water-based pot, typically has low water absorption and high lipophilicity. The solvent dye is easily absorbed into the lens base material or the hard coat layer having high lipophilicity, which improves dye-affinity. Thus, dyeing time can be shortened.

In the dyeing method for a plastic lens according to the exemplary aspect of the invention, a temperature of the oil bath is 100 degrees C or more when the plastic lens is immersed.

According to the exemplary aspect of the invention, the temperature of the oil-based dyeing pot is set to 100 degrees C or more for dyeing. In other words, since the oil-based dyeing pot is used, the temperature can be set to 100 degrees C or more. As the temperature is higher, the dye-affinity of the lens base material can be further enhanced.

Since the lens base material can be dyed at a higher temperature, dyeing time for the lens base material can be considerably reduced.

In the dyeing method for plastic lens according to the exemplary aspect of the invention, oil used for the oil bath may be silicone oil.

The oil used in the dyeing pot may be vegetable oil, mineral oil, and synthetic oil. Among the above, the silicone oil exhibits excellent heat resistance and viscosity stability.

Thus, by using the silicone oil, the temperature of the dyeing pot can be set higher and the dyeing time can be further reduced. Additionally, deterioration of the oil due to high temperature can be efficiently suppressed, and the dye-affinity of the dyeing pot can be stabilized for a long time.

### DESCRIPTION OF EXEMPLARY EMBODIMENT(S)

An exemplary embodiment of the invention will be described below. A plastic lens for spectacles will be exemplarily described as a lens to be dyed by a method of dyeing a plastic lens according to this exemplary embodiment.

### Arrangement of Lens

A lens has a hard coat layer formed on a surface of a lens base material. The lens may also have a primer layer formed between the hard coat layer and the lens base material.

### Arrangement of Lens Base Material

The lens base material is not particularly limited, but is preferably a transparent plastic material having a refractive index of 1.6 or higher in terms of weight reduction of the lens. Examples of such lens base material may include: a thiourethane plastic made by reacting a compound having an isocyanate group or an isothiocyanate group with a compound having a mercapto group; and an episulfide plastic made by polymerization-curing a material monomer containing a compound having an episulfide group.

As the compound having an isocyanate group or an isothiocyanate group, which is a main component of the thiourethane plastic, known compounds can be used without any limination.

Examples of the compound having an isocyanate group may include ethylene diisocyanate, trimethylene diisocyanate, 2,4,4-trimethylhexane diisocyanate, hexamethylene diisocyanate, and m-xylylene diisocyanate.

Also, as for the compound having a mercapto group, known compounds can be used. Examples of the compound having a mercapto group may include: an aliphatic polythiol such as 1,2-ethanedithiol, 1,6-hexanediol and 1,1-cyclohexanedithiol; and an aromatic polythiol such as 1,2-dimercapto benzene and 1,2,3-tris(mercaptomethyl)benzene. In order to provide the plastic lens with a high refractive index, a polythiol containing a sulfur atom in addition to a mercapto group may be preferably used, examples of which may include 1,2-bis(mercaptomethylthio)benzene, 1,2,3-tris(mercaptoethylthio)benzene and 1,2-bis((2-mercaptoethyl)thio)-3-mercaptopropane.

As the compound having an episulfide group and used as the material monomer for the episulfide plastic, known compounds having an episulfide group can be used without any limitation. An example of such a compound is an episulfide compound that is obtained by substituting a part or all of oxygen of an epoxy group contained in an existing epoxy compound with sulfur. In order to provide the plastic lens with a high refractive index, a compound containing a sulfur atom in addition to an episulfide group may be preferably used. Examples of such a compound may include 1,2-bis(beta-epithiopropylthio)ethane, his(beta-epithiopropyl)sullide, 1,4-bis(beta-epithiopropylthiomethyl)benzene, and 2,5-bis(beta-epithiopropylthiomethyl)-1,4-dithiane, and bis(beta-epithiopropyl) disulfide.

When a thiourethane plastic lens or an episulfide plastic lens is polymerized, one or more of the above-described material monomers are weighed and mixed. As needed, a compound having another functional group reactable with the material monomers may be added. Further, an ultraviolet absorber, an antioxidant, an internal mold release agent, a bluing agent or the like may be added as necessary. Furthermore, a polymerization catalyst or the like may be added and mixed to be uniform, so that a polymerizable composition for a plastic lens is prepared.

The polymerizable composition prepared as described above is injected into a void surrounded by a glass mold or the like, and then the void is hermetically-closed. Subsequently, the polymerizable composition is heated in a hot-air oven, which is initially set to 10 to 30 degrees C and then gradually raised to 100 to 150 degrees C for 10 to 100 hours, so as to complete polymerization. Then, the polymerizable composition is cooled to ambient temperature and a plastic lens is released from the glass mold or the like. In this manner, various plastic lens can be manufactured. After such polymerization, the plastic lens may be subjected to an annealing treatment at 80 to 130 degrees C for approximately 10 minutes to 5 hours as necessary in order to relieve internal stress.

Such materials having high refractive index are typically difficult to be dyed. Especially, an episulfide lens base material is hardly dyed. However, according to the exemplary aspect of the invention, such materials can be favorably used as a lens base material for a color lens because the materials are dyed in an oil-based dyeing pot as described later.

### Arrangement of Hard Coat Layer

A composition used for a hard coat layer is not particularly limited, and known compositions can be used therefor. For example, the composition may contain a fine inorganic oxide particle containing titanium oxide having a rutile-type crystal structure with an organosilicon compound represented by the following formula (1) being used as a binder.

R¹R²ₙSiX¹₃₋ₙ (1)

In the formula, R¹ is an organic group having a polymerizable reactive group, R² is a hydrocarbon group having 1 to 6 carbon atoms, X¹ is a hydrolyzable group, and n is 0 or 1.

Specifically, R¹ has a polymerizable reactive group such as a vinyl group, an allyl group, an acryl group, a methacryl group, a 1-methylvinyl group, an epoxy group, a mercapto group, a cyano group, an isocyano group and an amino group. X¹ is a hydrolyzable functional group, examples of which may be an alkoxy group such as a methoxy group, an ethoxy group and a methoxyethoxy group, a halogen group such as a chloro group and a bromo group, and an acyloxy group.

Examples of the organosilicon compound represented by the formula (1) may include vinyltrialkoxysilane, vinyltrichlorosilane, vinyltri(beta-methoxy-ethoxy)silane, allyltrialkoxysilane, acryloxypropyltrialkoxysilane, methacryloxypropyltrialkoxysilane, gamma-glycidoxypropyltrialkoxysilane, beta-(3,4-epoxycyclohexyl)-ethyltrialkoxysilane, mercaptopropyltrialkoxysilane, and gamma-aminopropyltrialkoxysilane.

Two or more of the organosilicon compounds may be mixed in use.

The fine inorganic oxide particle may contain only titanium oxide or may contain titanium oxide and other inorganic oxides. For example, oxides of metals such as Si, Al, Sn, Sb, Ta, Ce, La, Fe, Zn, W, Zr and In may be mixed with titanium oxide. Further, the fine inorganic oxide particle may be a composite particle of titanium oxide and other inorganic oxides. When the composite particle is used, for example, oxides of metal such as Si, Al, Sn, Sb, Ta, Ce, La, Fe, Zn, W, Zr and In may be combined with titanium oxide.

Furthermore, a curing catalyst such as perchlorates or metal acetylacetonates may be added to the hard coat layer as necessary.

Examples of the curing catalyst may include: perchloric acids such as a perchloric acid, an ammonium perchlorate and a magnesium perchlorate; an acetylacetonato having, as a central metal atom, Cu(II), Zn(II), Co(II), Ni(II), Be(II), Ce(III), Ta(III), Ti(III), Mn(III), La(III), Cr(III), V(III), Co(III), Fe(III), Al(III), Ce(IV), Zr(IV), V(IV) or the like; an amine; an amino acid such as a glycine; a Lewis acid; and a metal salt of an organic acid.

A coating composition containing the above components may be diluted with a solvent as needed for use. The solvent may be alcohols, esters, ketones, ethers, aromatics or the like. The coating composition may be added with a small amount of an additive as needed in order to improve coating property of the coating composition, curing speed and film performance after curing. Examples of the additive include a metal chelate compound, a surfactant, an antistatic agent, an ultraviolet absorber, an antioxidant, a disperse dye, a solvent dye, a pigment, a photochromic compound, a light/thermal stabilizer such as a hindered amine and a hindered phenol.

As for a coating/curing method of the coating composition, the coating composition is coated by dipping, spin coating, spray coating, roll coating or flow coating, and then heated and dried at 40 to 200 degrees C for several hours so as to form a film. The thickness of the hard coat layer is preferably 0.05 to 30µm. When the thickness is below 0.05µm, basic performance of the hard coat layer cannot be obtained. On the other hand, when the thickness exceeds 30µm, smoothness of the surface may be degraded or optical distortion may be caused. Incidentally, a refractive index of the hard coat layer preferably corresponds to that of the base material and that of the primer layer in order to prevent interference fringes.

### Preparation of Dyeing Agent

Next, preparation of dyeing agent will be described below.

A dye and oil as medium are used in preparing the dyeing agent.

The dye is not particularly limited, but may be a solvent dye and a disperse dye. The solvent dye is preferably used in terms of a dyeing process in an oil bath.

Examples of the solvent dye may include various dyes such as anthraquinone-type dyes, monoazo-type dyes, or heterocyclic-type dyes. More specifically, examples of the solvent dye may include "Diaresin Blue J (C.I.Solvent Blue 33)" (trade name), "Diaresin Blue G (C.I.Solvent Blue 90)" (trade name), "Diaresin Blue N (C.I.Solvent Blue 94)" (trade name), "Diaresin Green C (C.I.Solvent Green 26)" (trade name), "Diaresin Red A (C.I.Solvent Red 179)" (trade name), "Diaresin Red S (C.I.Solvent Red 152)" (trade name), "Diaresin Violet A (C.I.Solvent Violet 32)" (trade name), "Diaresin Yellow F (C.I.Solvent Yellow 104)" (trade name), "Diaresin Orange G (C.I.Solvent Orange 68)" (trade name) (all produced by Mitsubishi Chemical Industries, Ltd.), "OIL BLUE613 (C.I.Solvent Blue 5)" (trade name), "OIL BLUE630 (C.I.Solvent Blue 36)" (trade name) (all produced by Orient Chemical Industries, Ltd.). The above dyes may be used alone or in combination depending on a desired color.

According to the exemplary aspect of the invention, the total amount of the dye added to the oil is preferably in a range of 0.01 to 50g per 1 liter of oil for use. When the dye is below 0.01 g, the lens may not be dyed with a desired color because the total amount thereof is too small. On the other hand, when the dye exceeds 50g, the lens may not be uniformly dyed.

The oil is not particularly limited, but may be vegetable oil, mineral oil, and synthetic oil. Especially, silicone oil is preferably used in terms of heat resistance, viscosity stability or the like.

Examples of the silicone oil are dimethyl silicone oil and modified silicone oil. The silicone oil may be suitably selected in terms of heat resistance and viscosity. Example of such silicone oil may include "TSF451-20" (trade name), "TSF451-30" (trade name) (both produced by Toshiba Silicone Co., Ltd.), "KF965-1-100" (trade name), "KF968-1-100" (trade name) (both produced by Shin-Etsu Chemical Co., Ltd.).

A dye carrier agent may be added to the dyeing agent.

Examples of the dye carrier agent may include alcohols having aromatic ring such as benzyl alcohol or phenethyl alcohol, and phenylphenols such as p-phenylphenol, o-phenylphenol and m-phenylphenol.

An additive amount of the dye carrier agent is in a range of 0.1 mass% or more and 5 mass% or less relative to the oil in the dyebath. When the additive amount of the dye carrier agent is less than 0.1 mass%, concentration of the dye carrier agent is too low. Thus, the dye carrier does not function well, which lowers dye-affinity. On the other hand, when the additive amount of the dye carrier agent exceeds 5 mass%, the lens may not be uniformly dyed.

Further, various additive agents such as an antioxidant, an antifoamer or a surfactant may be added as necessary.

### Dyeing Method

1 liter of silicone oil and 5g of "Diaresin Blue J" (trade name, produced by Mitsubishi Chemical Industries, Ltd.) as a solvent dye are put in an oil bath, and the temperature of the oil bath is set to 100 degrees C. While being kept heated, the oil and the dye are sufficiently agitated until the temperature of the oil bath is stabilized so as to prepare dyeing agent.

Subsequently, the temperature of the oil bath is set to 120 degrees C Just before dyeing is started. After the temperature is stabilized, an episulfide lens base material is completely immersed in the dying agent in the oil bath. In 10 minutes, the lens base material is taken out of the oil bath so as to prepare a dyed lens.

The following advantages can be attained according to the exemplary embodiment.
(1) The oil-based dyeing agent is prepared according to the exemplary embodiment.
   Thus, the dyeing agent can be heated to a high temperature, for example, over 100 degrees C. Since a lens base material is typically dyed easily at a high temperature, dyeing time for the lens base material can be considerably reduced.
(2) The solvent dye is used in the oil-based dying agent.
   Since the hard coat layer has high lipophilicity, the lens can be easily dyed with the solvent dye. Additionally, the use of the oil-based dye agent allows the dye agent to be heated to a high temperature. Thus, the dyeing time can be further reduced.
(3) Since the episulfide lens base material, which is difficult to be dyed in the water-based dying agent, has lipophilicity, the material can be easily dyed with the solvent dye. Thus, dyeing time for the episulfide lens base material can be considerably reduced, which is highly advantageous.
(4) The hard coat layer is formed of the composition containing a fine inorganic oxide particle (A) and an organosilicon compound (B).
   Thus, the lens base material on which the hard coat layer containing the components (A) and (B) is formed has high hardness and abrasion resistance.
(5) Silicone oil is used as oil in the dyeing pot. Since the silicone oil has excellent heat resistance and stable viscosity, stable dyeing property can be maintained even at a high temperature.

### Modifications of Exemplary Embodiment

The scope of the invention is not limited to the above exemplary embodiment, but includes modifications and improvements as long as an object of the invention can be achieved.

For example, though the lens base material having the hard coat layer formed on a surface thereof is used according to the exemplary embodiment, the lens base material that does not have the hard coat layer can be directly dyed.

Especially, since a lens base material made of episulfide resin has high lipophilicity, the dyeing time can be considerably reduced.

Incidentally, since the temperature of the dyeing pot can be set high (over 100 degrees C) even when the lens base material made of episulfide resin is used, the dyeing time can be reduced.

Though the hard coat layer is directly formed on the lens base material according to the exemplary embodiment, the primer layer may be formed on the lens base material to improve adhesion between the lens base material and the hard coat layer and improve impact resistance.

The primer layer preferably contains, for instance, an organic resin polymer having a polar group and a fine metal oxide particle such as titanium oxide, zirconium oxide, tin oxide, and silicon oxide.

As the organic resin polymer having the polar group, various resins such as a polyester resin, a polyurethane resin, an epoxy resin, a melamine resin, a polyolefin resin, a urethane acrylate resin, and an epoxy acrylate resin are usable. Among these, a polyester resin is particularly preferable for use in terms of adherence to the lens base material containing a sulfur atom and dispersibility of fine metal oxide particles as a filler.

Further, though the solvent dye is used in the exemplary embodiment, a water soluble dye may be used. However, additives such as a surfactant need to be added at this time.

### Examples

The invention will be described in further detail by exemplifying Examples and Comparatives. However, the invention is not limited to Examples.

Lens base materials (L1, L2) were initially prepared as described below. Additionally, lens base materials (L3, L4) with hard coat layers were prepared by forming hard coat layers on a surface of the obtained lens base materials.

Subsequently, a dyebath as shown in Examples 1 to 10 and Comparatives 1 to 7 was prepared, and the lens base material with the hard coat layer was immersed in the dyebath for dyeing. Then, dye-affinity was evaluated.

### 1. Preparation of Lens Base Material L1

### (1-1) Preparation of Material Monomer

As a material monomer, 90 parts by mass of bis(2,3-epithiopropyl)disulfide, 10 parts by mass of a compound prepared by mixing one, two, or three of 4,8-dimereaptomethyl-1,11-dimercapto-3,6,9-trithiaundecane, 4,7-dimercaptomethyl-1,11 -dimercapto-3,6,9-trithiaundecane, and 5,7-dimereaptomethyl-1,11-dimereapto-3,6,9-trithiaundecane, and 1.0 parts by mass of an ultraviolet absorber ("SEESORB701" produced by SHIPRO KASEI KAISHA, LTD.) were put in a glass container provided with a stirring bar, and stirred sufficiently to be completely dissolved. Subsequently, 0.02 parts by mass of N,N-dimethylcyclohexylamine and 0.10 parts by mass of N,N-dicyclohexylmethylamine were added in this mixture as a catalyst, and stirred at 20 degrees C to be uniform.

### (1-2) Cast Polymerization

The mixture (monomer) prepared as described in (1-1) was injected into a lens mold formed by holding two glass molds facing each other with a sealing tape. The lens mold was heated by a hot-air furnace of which the temperature was raised from 30 to 130 degrees C for 20 hours. After being kept heated at 130 degrees C for 2 hours, the lens mold was left to be cooled to 70 degrees C for 2 hours. Then, the polymer was released from the lens mold so as to obtain an episulfide resin lens base material L1. A refractive index of the lens base material L1 measured by an Abbe refractometer was 1.74.

### 2. Preparation of Lens Base Material L2

### (2-1) Preparation of Material Monomer

50.6 parts by mass of M-xylylene diisocyanate, 49.4 parts by mass of a compound prepared by mixing one, two, or three of 4,8-dimercaptomethyl-1,11-dimercapto-3,6,9-trithiaundecane, 4,7-dimercaptomethyl-1,11-dimercapto-3,6,9-trithiaundecane, and 5,7-dimereaptomethyl-1,11-dimereapto-3,6,9-trithiaundecane, 1.2 parts by mass of an ultraviolet absorber ("SEESORB701" produced by SHIPRO KASEI KAISHA, LTD.), and 0.1 parts by mass of an internal mold release agent ("Zelec UN" produced by Stepan Company) were put in a glass container provided with a stirring bar, sufficiently stirred and mixed to be uniformly dispersed and dissolved. Subsequently, 0.005 parts by mass of dibutyltin dichloride and 0.005 parts by mass of N,N-dimethylcyclohexylamine were added in this mixture. After being sufficiently stirred to be dissolved at 30 degrees C, the mixture was depressurized to 5mmHg and deaerated for 30 minutes while being stirred.

### (2-2) Cast Polymerization

The mixture (monomer) prepared as described in (2-1) was injected into a lens mold formed by holding two glass molds facing each other with a sealing tape. The lens mold was heated by a hot-air furnace of which the temperature was raised from 30 to 120 degrees C for 20 hours. After being heated at 120 degrees C for 0.5 hours, the lens mold was left to be cooled to 70 degrees C for 2 hours. Then, the polymer was released from the lens mold so as to obtain a thiourethane resin lens base material L2. A refractive index of the lens base material L2 measured by an Abbe refractometer was 1.67.

### 3. Preparation of Lens Base Material L3 with Hard Coat Layer

### (3-1) Preparation of Composition for Primer Layer and Formation of Primer Layer

100 parts by mass of a commercially available polyester resin "Pesresin A-160P" (trade name, produced by TAKAMATSU OIL & FAT CO., LTD, water-dispersible emulsion, solid concentration of 25%) was mixed with 84 parts by mass of a titanium oxide composite particle "Optolake 1130F-2(A-8)" (trade name, produced by Catalyst & Chemicals Co., Ltd, Fe₂O₃/TiO₂=0.02, SiO₂/TiO₂=0.11, solid concentration of 30%, methyl alcohol as a dispersible solvent, tetraethoxysilane for surface finishing), 640 parts by mass of methyl alcohol as a diluting solvent, 1 part by mass of a silicone-based surfactant "SILWET L-77" (trade name, produced by Nippon Unicar Company Limited) as a leveling agent, and then stirred for 3 hours so as to prepare a composition for a primer layer.

Then, the lens base material L1 was coated with the composition for the primer layer by dipping (pull speed 20cm/min), and the coated lens was subjected to thermal curing treatment at 100 degrees C for 15 minutes to form the primer layer of 0.8 to 0.9µm on the surface of the lens.

### (3-2) Preparation of Composition for Hard Coat Layer and Formation of Hard Coat Layer

100 parts by mass of Butyl cellosolve and 155 parts by mass of gamma-glycidoxypropyltrimethoxysilane were mixed and stirred sufficiently to be uniform. 43 parts by mass of 0.1N aqueous hydrochloric acid was dropped in the mixture while being stirred. After further being stirred at an ambient temperature for 4 hours, the mixture was put and left in a refrigerator for a whole day.

Subsequently, 0.3 parts by mass of a silicone-based surfactant "L-7001" (trade name, produced by Nippon Unicar Company Limited) was added and stirred. Then, 700 parts by mass of a fine composite particle sol "Optolake 1120Z S25-A8" (trade name, produced by CATALYSTS & CHEMICALS INC. CO., LTD, solid concentration of 200% by weight), which mainly contains methanol dispersible titanium dioxide, zirconium dioxide, and silicon dioxide, was added and sufficiently stirred.

Further, Fe(III) acetylacetonato of 0.2 parts by mass was added and stirred for 3 hours at an ambient temperature, which was left in a refrigerator for a whole day so as to prepare a composition for a hard coat layer.

Then, the lens base material L1 having the primer layer obtained as described in (3-1) was coated with the composition for the hard coat layer by dipping (pull speed 18cm/min). The coated lens base material was dried at 80 degrees C for 20 minutes and burned at 125 degrees C for 120 minutes to form the hard coat layer having a thickness of 2.0 to 2.2µm and a refractive rate of 1.67 on the surface of the primary layer.

As described above, the lens base material L1 was subjected to a surface finishing to have a double-layered structure of the primer layer and the hard coat layer to prepare the lens base material L3 with the hard coat layer.

### 4. Preparation of Lens Base Material L4 with Hard Coat Layer

Using the lens base material L2, the composition for the hard coat layer was prepared in the same manner as in (3-2), then coated and cured under the same condition as (3-2).

The hard coat layer formed on the lens base material L2 had a thickness of 1.8 to 2.1µm and a refractive rate of 1.67. As described above, the hard coat layer was provided on the lens base material L2 as a single layer to prepare the lens base material L4 with the hard coat layer.

### 5. Preparation of Dyebath

### (5-1) Dyebath A

A commercially available oil bath with a magnetic stirrer, which was filled up with a silicone oil "KF968-1-100" (trade name, produced by Shin-Etsu Chemical Co., Ltd.), was prepared. Then, a beaker of 1 liter was put in the oil bath. 1 liter of the silicone oil "KF968-1-100" (trade name, produced by Shin-Etsu Chemical Co., Ltd.) and 4g of "Daiaresin Blue J" (trade name, produced by Mitsubishi Chemical Industries, Ltd.) as a solvent dye were put in the beaker. The temperature of the oil bath was set to 100 degrees C, the oil was sufficiently stirred with a stirring bar in the oil bath while being heated. After a temperature of the oil bath was stabilized, a dyebath A was prepared. For dyeing the lens, a preset temperature of the oil bath was changed to another predetermined temperature. After the temperature was stabilized, the lens was dyed.

### (5-2) Dyebath B

A dyebath B was prepared in the same manner as the dyebath A. As a solvent dye, 2g of "Daiaresin Blue J" (trade name, produced by Mitsubishi Chemical Industries, Ltd.), 1g of "Diarejin Red S" (trade name, produced by Mitsubishi Chemical Industries, Ltd.), and 1g of "Diaresin Yellow F" (trade name, produced by Mitsubishi Chemical Industries, Ltd.) were added. Subsequently, the same process was conducted as the described-above process for preparing the dyebath A so as to prepare a dyebath B.

### (5-3) Dyebath C

The same oil bath and beaker were used as those used for the dyebath A. Except that 1 liter of a soybean oil (produced by KANTO CHEMICAL CO., INC.) was put in the beaker, the same process was conducted as the above-described process for preparing the dyebath A so as to prepare a dyebath C.

### (5-4) Dyebath D

A commercially available water bath with a magnetic stirrer, which was filled up with water, was prepared. Further, the beaker of 1 liter was put in the water bath. 1 liter of purified water was put in the beaker. As a surfactant, 5cc of "Neonole 20" (trade name; produced by Yamakawa Chemical Industry Co., Ltd.) was added, and then the same solvent dye as that of the dyebath A was added. The temperature of the water bath was set to 95 degrees C. After the temperature of the water bath was stabilized, the aqueous solution in the beaker was stirred with a stirring bar so as to prepare a dyebath D.

### Examples 1 to 10, Comparatives 1 to 7

Using a lens base material and a dyebath under a temperature and time as shown in Table 1, the lens base material was immersed in the dyebath for dyeing a lens.

### Evaluation Method

In Examples 1 to 10 and Comparatives 1 to 7, transmission of a dyed lens was measured with a BPI photometer. From values of transmission of the dyed lens, dye-affinity was evaluated as follows.

### Evaluation by Transmission after Dyeing

AA: strongly dyed (50 or less with the BPI photometer)
BB: moderately dyed (51 to 70 with the BPI photometer)
CC: weakly dyed (71 to 80 with the BPI photometer)
DD: Not dyed or slightly dyed (81 or more with the BPI photometer)

Incidentally, the criteria of the above evaluation were as follows.

Unless the transmission measured by the photometer was 50 or less after the lens was dyed for approximately 60 minutes, it took too much time for actually dyeing the lens strongly, which caused problems. When the transmission measured by the photometer was 51 to 70, the lens may be dyed strongly by being dyed for a long time (over 4 or 5 hours). When the transmission was 71 or more, it was hard to dye the lens strongly even if being dyed for a long time.

The evaluation results are shown in Table 1.

**Table 1**

| | Condition | | | | Evaluation | |
|---|---|---|---|---|---|---|
| | Lens | Dyebath | Dyeing Temperature | Dyeing Time | Dye-Affinity | Transmission After Dyeing |
| Example 1 | L1 | A | 120°C | 60 minutes | AA | 37 |
| Example 2 | L1 | A | 110°C | 60 minutes | AA | 49 |
| Example 3 | L1 | A | 105°C | 60 minutes | BB | 57 |
| Example 4 | L1 | B | 120°C | 60 minutes | AA | 38 |
| Example 5 | L2 | A | 120°C | 60 minutes | AA | 35 |
| Example 6 | L2 | A | 110°C | 60 minutes | AA | 46 |
| Example 7 | L2 | B | 120°C | 60 minutes | AA | 36 |
| Example 8 | L1 | C | 120°C | 60 minutes | AA | 38 |
| Example 9 | L3 | A | 120°C | 60 minutes | AA | 37 |
| Example 10 | L4 | A | 120°C | 60 minutes | BB | 56 |
| Comparative 1 | L1 | A | 95°C | 60 minutes | CC | 73 |
| Comparative 2 | L1 | B | 95°C | 60 minutes | CC | 75 |
| Comparative 3 | L1 | D | 95°C | 60 minutes | DD | 85 |
| Comparative 4 | L1 | D | 95°C | 600 minutes | DD | 81 |
| Comparative 5 | L3 | D | 95°C | 60 minutes | DD | 84 |
| Comparative 6 | L3 | D | 95°C | 600 minutes | DD | 81 |
| Comparative 7 | L4 | D | 95°C | 60 minutes | DD | 85 |

As seen from the results in Table 1, since the oil bath and the solvent dye were used for the episulfide resin lens base material in Examples 1 to 4 and 8, favorable dyeing results were obtained. Also, as seen from the results in Examples 1 to 3, as the dyeing temperature was higher, more favorable results were obtained.

Further, since the oil bath and the solvent dye were used for the thiourethane resin lens base material in Examples 5 to 7, favorable dyeing results were obtained.

In Examples 9 and 10, the lens base material with the hard coat layer was dyed, and favorable dyeing results were also obtained.

On the other hand, since the dyeing temperature was lower than 100 degrees C in Comparatives 1 and 2, the dye-affinity was inferior compared to Examples 1 and 4.

Since the dyeing agent based on hot water was used in Comparatives 3 to 7, the dyeing speed was extremely low and the lens was slightly dyed. Additionally, the solvent dye was not evenly dispersed in the hot water and therefore the lens was not uniformly dyed. Even when the dyeing time was 10 times longer as in Comparatives 4 and 6, considerable improvements were not observed.

The invention is applicable to an optical lens or a spectacle lens.

## Claims

1. A dyeing method for a plastic lens, comprising:
immersing the plastic lens in an oil bath containing a dye.

2. The dyeing method for a plastic lens according to claim 1, wherein the plastic lens is made of an episulfide material.

3. The dyeing method for a plastic lens according to claim 1 or 2, wherein the plastic lens has a single layered or multilayered hard coat layer.

4. The dyeing method for a plastic lens according to claim 3, wherein the hard coat layer contains the following (A) and (B);
(A) a fine inorganic oxide particle, and
(B) an organosilicon compound represented by the following formula (1),
R¹R²ₙSiX¹₃₋ₙ (1)
(where R¹ is an organic group having a polymerizable reactive group, R² is a hydrocarbon group having 1 to 6 carbon atoms, X¹ is a hydrolyzable group, and n is 0 or 1).

5. The dyeing method for a plastic lens according to any one of claims 1 to 4, wherein the dye is a solvent dye.

6. The dyeing method for a plastic lens according to any one of claims 1 to 5, wherein a temperature of the oil bath is 100 degrees C or more when the plastic lens is immersed.

7. The dyeing method for a plastic lens according to any one of claims 1 to 6, wherein oil used for the oil bath is silicone oil.
